## Europäisches Patentamt
## European Patent Office
## Office européen des brevets

(19)

(11) Publication number: **0 087 474**
**A1**

## EUROPEAN PATENT APPLICATION

published in accordance with Art. 158(3) EPC

(12)

(21) Application number: 82901000.8

(22) Date of filing: 01.04.82

Data of the international application taken as a basis:

(86) International application number:
PCT/JP82/00092

(87) International publication number:
WO82/03387 (14.10.82 82/25)

(51) Int. Cl.³: **C 04 B 33/00**
**C 04 B 33/13**

(30) Priority: 03.04.81 JP 50212/81
10.03.82 JP 37861/82

(43) Date of publication of application:
07.09.83 Bulletin 83/36

(84) Designated Contracting States:
FR

(71) Applicant: THE TOHOKU ELECTRIC POWER CO., INC.
7-1, 3-chome, Ichibancho
Sendai-shi Miyagi-ken 980(JP)

(72) Inventor: YAMAMOTO, Tadashi
12-20, Sakuragicho
Sendai-shi Miyagi-ken 982(JP)

(74) Representative: Casalonga, Alain et al,
BUREAU D.A. CASALONGA OFFICE JOSSE & PETIT
Baaderstrasse 12-14
D-8000 München 5(DE)

(54) CLAY PRODUCTS AND PROCESS FOR THEIR PRODUCTION.

(57) Clay products such as bricks, tiles, roof tiles, etc., which are produced by adding up to 950 parts by weight of coal ash to 100 parts by weight of a clay material, mixing, molding and baking the resulting mixture.

EP 0 087 474 A1

S P E C I F I C A T I O N

CLAY ARTICLE AND METHOD FOR MANUFACTURING THE SAME

Technical Field

The present invention relates to clay articles such as bricks, tiles, or roofing tiles and, more particularly, to clay articles prepared by mixing coal ash with a clay base material, and to a method for manufacturing the same.

Background Art

Clay articles have been conventionally manufactured by selecting a suitable type of raw material and types and amounts of additives in accordance with the required strength and water absorption properties which are, in turn, determined according to the intended application of the resultant articles, and then molding and firing the raw material mixture of these materials.

For example, bricks, roofing tiles and so on are prepared from a mixture of a lower grade of caly such as soil from a paddy field, a plowed field or a mountain, with river sand, chamotte or the like as an anti-caking agent, while high-class roofing tiles, earthenware goods or the like are prepared from a mixture of shale with a higher quality clay or ball clay as a binder. Tiles are prepared from a mixture of a clay of good quality with feldspar, siliceous clay or the like. Although satisfactory articles can be manufactured from such raw material mixtures, they are also subject to the following drawbacks:

i) Since all the raw materials must be finely pulverized by the wet method with a ball mill or the like, the energy required for preparing the raw material mixture is high.

ii) The raw materials which are finely pulverized may be used in the wet form or in the dry form. In the case of dry compression molding such as tiles, a great amount of energy is required for drying a clay slurry.

iii) Since the clay itself is a limited resource, use of such a material in large amounts presents the problem of conservation of natural resources.

The present invention has been made in consideration of this and has for its object to provide a clay article and a method for manufacturing the same, which are capable of minimizing the required raw material pulverizing energy and drying energy, and which are advantageous with respect to the problem of conservation of natural resources.

Disclosure of Invention

According to an aspect of the present invention, there is provided a clay article characterized in that said clay article is manufactured by mixing 950 parts by weight of coal ash with 100 parts by weight of a clay base material, and molding and firing the resultant mixture.

According to another aspect of the present invention, there is also provided a method for manufacturing a clay article, characterized by comprising the steps of adding coal ash in an amount of not more than ·950 parts by weight and water in an amount to provide a consistency suitable for a subsequent molding step to 100 parts by weight of the clay base material; mixing these raw materials; molding the resultant mixture and firing it.

Brief Description of Drawings

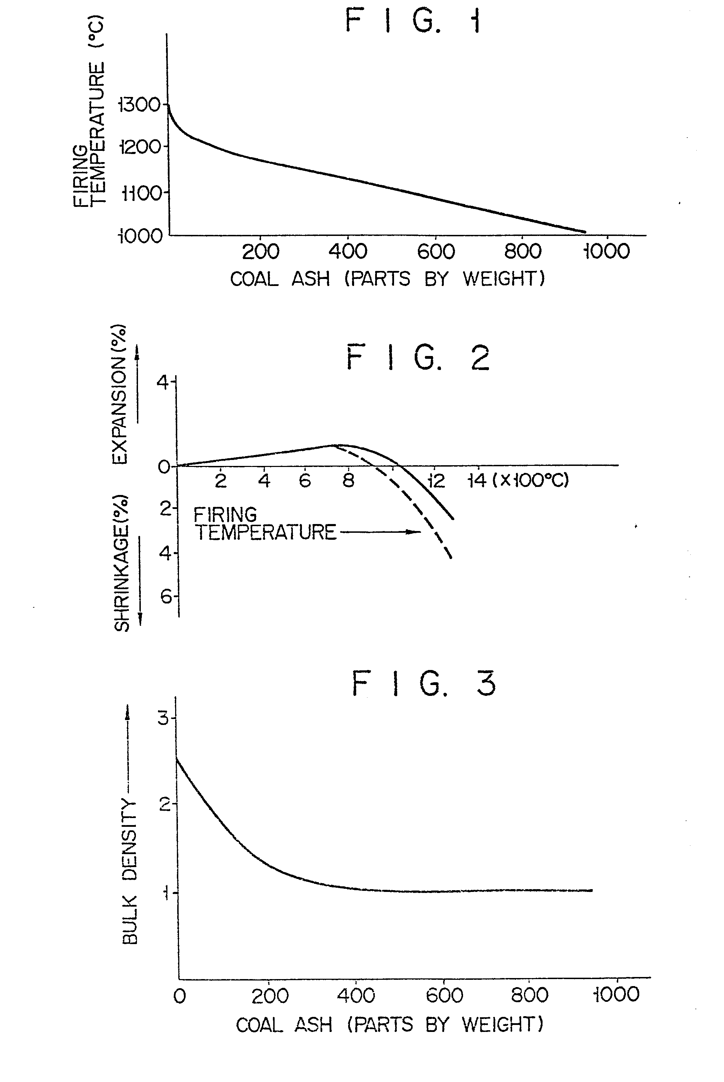

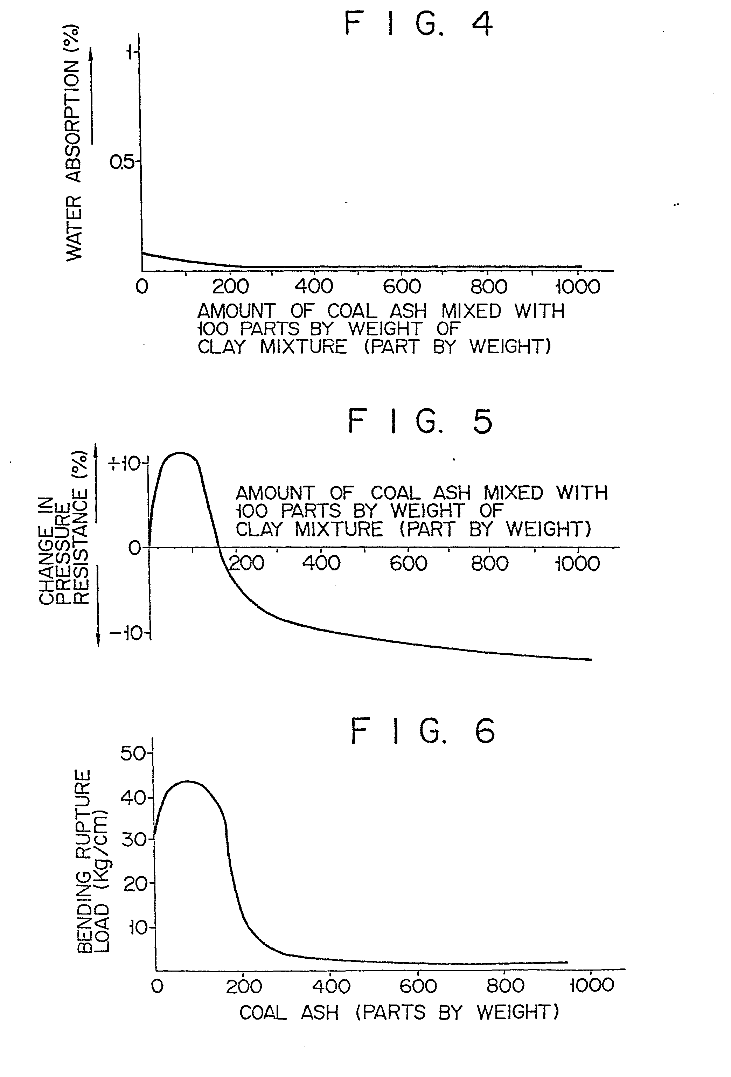

Fig. 1 is a graph showing the relationship between the content of coal ash and the optimal firing temperature; Fig. 2 is a graph showing the relationship between the firing temperature of a clay article and the degree of expansion and shrinkage of a molded body; Fig. 3 is a graph showing the bulk density of the clay article after firing; Fig. 4 is a graph showing the relationship between the content of cola ash and water absorption of the clay article containing coal ash; Fig. 5 is a graph showing the relationship between the coal ash content and pressure resistance; and Fig. 6 is a graph showing the bending strength of the article after firing.

Best Mode of Carrying Out the Invention

In this specification, the concent of the clay base material is such that it includes base materials containing a clay alone, or mixtures thereof with fine powders of stones such as feldspar, siliceous stone, pottery stone, agalmatolite, or shale. The clays are a group of secondary minerals containing fine hydrous silicate minerals, which exhibit plasticity upon addition of a suitable amount of water and intimately mixing, rigidity upon drying, and a sintering property upon firing at high temperatures.

The coal ash to be used in the present invention is an inorganic material which is a residue remaining after burning coal. The coal ash is generally a fine powder or granules having a particle diameter of about 1 to 200 μm and containing $SiO_2$, $Aℓ_2O_3$, $Fe_2O_3$, CaO, MgO, $Na_2O$, or $K_2O$. The coal ash amounts to about 17 % of the weight of the coal before burning.

According to the present invention, 950 parts by weight (coal ash in dry state; the coal ash is assumed to be in this state hereinafter unless otherwise stated) or less or coal ash are added to 100 parts by weight of a clay base material. The mixing ratio of the coal ash is determined depending upon the application of the resultant article, the composition of the coal ash or the like. However, in order to produce an article having a high bending strength, the coal ash is generally added in an amount of 200 parts by weight or less and preferably in an amount of 180 parts by weight or less. It is to be noted that molding becomes very difficult if the amount of coal ash exceeds 950 parts by weight (based on 100 parts by weight of the clay base material).

To the mixture of the clay base material and coal ash is added a suitable amount of water, or water in an amount to impart a suitable consistency for molding. The resultant mixture is intimately mixed, is molded into a desired shape, and is fired. The molding method may be injection molding, extrusion molding, compression molding or the like as in the conventional clay article manufacturing methods. The firing temperature is preferably lowered with an increase in the amount of coal ash although it changes depending upon the mixing ratio of coal ash.

Example 1

The clay base material used contained 30 % by weight of ball clay (a strongly plastic clay containing kaolinite in the hexagonal plate shape as a major component), 40 % by weight of pottery stone (mean par-ticle diameter: 40 $\mu$m), and 30 % by weight of feldspar (means particle diameter: 40 $\mu$m). Coal ash used con-tained 58.6 % by weight (% means % by weight herein-after) of $SiO_2$, 27.3 % of $A\ell_2O_3$, 6.0 % of $Fe_2O_3$, 2.6 % of CaO and 2.2 % of MgO, all of which had particle diameters of 100 to 10 $\mu$m. The mixing ratios as well as the firing temperatures were varied to provide clay articles by compression molding (molding pressure: 80 $kg/cm^2$) and firing.

Figs. 1 to 6 show the characteristics or the like of the clay articles obtained in this manner.

Fig. 1 shows the optimal firing temperature (maximum temperature) as a function of the mixing ratio of the coal ash. It is seen from this that the firing temperature is lowered with an increase in the mixing ratio of the coal ash. In other words, the firing temperature can be lowered and the firing time can thus be shortened as the mixing ratio of the coal ash is increased. Therefore, the energy required for manufacturing the article can be reduced to a minimum.

Fig. 2 shows changes in the degree of expansion and shrinkage of the molded body during firing. The solid curve corresponds to the case where no coal ash is added, while the dotted curve corresponds to the case where coal ash is added in an amount of 60 parts by weight. A clay article first expands slightly and then shrinks as the firing temperature is raised. After completion of firing, the article has shrunk. As the mixing ratio of the coal ash increases, shrinkage increases.

Fig. 3 shows the relationship between the bulk density of the obtained clay article and the mixing ratio of the coal ash. It is easily seen from this graph that the density of the article decreases with an increase in the mixing ratio of the coal ash.

Fig. 4 shows the relationship between the water absorption and the mixing ratio of the coal ash. It is seen from this graph that the water absorption decreases with an increase in the coal ash. The data presented corresponds to the case where the firing temperature was 1,280°C at maximum and the immersion time in water was 48 hours.

Fig. 5 shows changes in the pressure resistance with changes in the mixing ratio of the coal ash. It is seen from this graph that the pressure resistance increases with an increase in the coal ash. The firing temperature was again 1,280°C.

Fig. 6 shows the relationship between the mixing ratio of the coal ash and the bending rupture load. The bending rupture load was measured in accordance with JIS A 5209.

Example 2

This example corresponds to the manufacture of a pottery plate.

The clay base material used contained 75 % by weight of shale (mean particle diameter: 40 μm), 5 % by weight of chamotte, and 20 % by weight of ball clay. The clay base material was mixed with 100 parts by weight of the same coal ash as in Example in the amount of 20 to 60 parts by weight. The resultant mixture was intimately mixed after adding about 20 % of water, vacuum extruded, and fired at a maximum firing temperature of 1,180°C for 60 hours. As a result, a pottery plate was obtained which had a bending strength of 150 to 280 kg/cm$^2$.

Example 3

This example corresponds to manufacture of porcelain tiles. Percent indicates % by weight hereinafter.

The clay base material used contained 40 % of Nishiyama pottery stone, 20 % of Adachi pottery stone, 10 % of Kuriya pottery stone (all of these pottery stones had particle sizes of 80 to 1 μm), and 30 % of ball clay. The same coal ash as in Example 1 was added to the clay base material in the amount of 40 parts by weight. After being sprayed with a small amount of water, the resultant mixture was subjected to compression molding (molding pressure: 100 kg/cm$^2$) and was then fired at a maximum firing temperature of 1,260°C for 40 hours to provide porcelain tiles.

As has been described in detail above, according to the present invention, the amount of clay used can be reduced to the minimum. Since the coal ash to be used is dry from the beginning, the energy required for drying the raw material mixture can be saved. Since the firing temperature can be lowered by the addition of coal ash, the heating energy for firing can be reduced. The addition of coal ash also allows a lighter article which is suitable for roofing material or outer wall material and is advantageous from the viewpoints of transportation and handling.

Since the coal ash is added in a suitable amount, for example, 10 to 200 parts by weight of the coal ash are added to 100 parts by weight of the clay base material, the mechanical strength can be improved over that of a conventional clay article which consists of the clay base material alone.

Since the coal ash is an industrial waste and is used to reduce the amounts of clay or feldspar to be used, natural resources may be used effectively.

Since a special color and gloss can be imparted to the surface of the article by addition of the coal ash, the article may be used without a glaze. The article can, of course, be glazed, if so desired.

Industrial Applicability

The present invention is applicable to the manufacture of most clay articles such as bricks, tiles, roofing tiles, building blocks and porcelain.

Claims:

(1) A clay article characterized in that a coal ash is added in an amount of not more than 950 parts by weight to 100 parts by weight of a clay base material, and a resultant mixture is molded and fired.

(2) A clay article according to claim 1, characterized in that the amount of the coal ash is 10 to 200 parts by weight based on 100 parts by weight of the clay base material.

(3) A clay article according to claim 1, characterized in that the clay base material consists of a clay alone.

(4) A clay article according to claim 1, characterized in that the clay base material is a member selected from the group consisting of feldspar, siliceous stone, pottery stone, agalmatolite, and shale.

(5) A clay article according to claim 1, wherein the amount of the coal ash is not more than 60 parts by weight based on 100 parts by weight of the clay base material.

(6) A method for manufacturing a clay article, characterized by the steps of adding a coal ash in an amount of not more than 950 parts by weight and water in an amount suitable to impart a consistency suitable for molding to 100 parts by weight of a clay base material followed by mixing; and molding and firing a resultant mixture.

# F I G. 1

FIRING TEMPERATURE (°C)

1300

1200

1100

1000

200    400    600    800    1000

COAL ASH (PARTS BY WEIGHT)

# F I G. 2

EXPANSION (%)

4

0

2    4    6    8    12    14 (×100°C)

SHRINKAGE(%)

2

FIRING
TEMPERATURE

4

6

# F I G. 3

BULK DENSITY

3

2

1

0    200    400    600    800    1000

COAL ASH (PARTS BY WEIGHT)

**0087474**

# F I G. 4

WATER ABSORPTION (%)

AMOUNT OF COAL ASH MIXED WITH
100 PARTS BY WEIGHT OF
CLAY MIXTURE (PART BY WEIGHT)

# F I G. 5

CHANGE IN PRESSURE RESISTANCE (%)

AMOUNT OF COAL ASH MIXED WITH
100 PARTS BY WEIGHT OF
CLAY MIXTURE (PART BY WEIGHT)

# F I G. 6

BENDING RUPTURE LOAD (Kg/cm)

COAL ASH (PARTS BY WEIGHT)

# INTERNATIONAL SEARCH REPORT

International Application No. PCT/JP82/00024

## I. CLASSIFICATION OF SUBJECT MATTER (if several classification symbols apply, indicate all) [3]

According to International Patent Classification (IPC) or to both National Classification and IPC

Int. Cl.[3]  C04B 33/00, 33/13

## II. FIELDS SEARCHED

### Minimum Documentation Searched [4]

| Classification System | Classification Symbols |
|---|---|
| I P C | C04B 33/00, 33/13 |

### Documentation Searched other than Minimum Documentation to the Extent that such Documents are Included in the Fields Searched [5]

| | | |
|---|---|---|
| Jitsuyo Shinan Koho | 1926 | – 1982 |
| Kokai Jitsuyo Shinan Koho | 1971 | – 1982 |

## III. DOCUMENTS CONSIDERED TO BE RELEVANT [14]

| Category* | Citation of Document, [16] with indication, where appropriate, of the relevant passages [17] | Relevant to Claim No. [18] |
|---|---|---|
| A | JP,A, 51-17206  (Kogyo Gijutsuin)  2. December. 1976  (2.12.1976) | |

* Special categories of cited documents: [15]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure. use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art

"&" document member of the same patent family

## IV. CERTIFICATION

| Date of the Actual Completion of the International Search [2] | Date of Mailing of this International Search Report [2] |
|---|---|
| June 28, 1982  (28.06.82) | June 28, 1982  (28.06.82) |

| International Searching Authority [1] | Signature of Authorized Officer [20] |
|---|---|
| Japanese Patent Office | |

Form PCT/ISA/210 (second sheet) (October 1981)